(19) **Europäisches Patentamt**

**European Patent Office**

**Office européen des brevets**

(11) **EP 1 040 128 B1**

(12) **EUROPÄISCHE PATENTSCHRIFT**

(45) Veröffentlichungstag und Bekanntmachung des Hinweises auf die Patenterteilung:
**23.04.2003 Patentblatt 2003/17**

(51) Int Cl.[7]: **C08F 2/34**, C08F 10/02, C08F 4/24, C08F 4/02, C08J 5/18

(21) Anmeldenummer: **98958923.9**

(22) Anmeldetag: **26.11.1998**

(86) Internationale Anmeldenummer:
**PCT/EP98/07638**

(87) Internationale Veröffentlichungsnummer:
**WO 99/029736 (17.06.1999 Gazette 1999/24)**

(54) **GASPHASENWIRBELSCHICHTVERFAHREN UND DANACH ERHÄLTLICHE ETHYLENHOMO- UND -COPOLYMERE**

GAS PHASE FLUIDIZED BED METHOD AND ETHYLENE HOMO- AND COPOLYMERS OBTAINED USING SAID METHOD

PROCEDE PAR LIT FLUIDISE EN PHASE VAPEUR ET HOMO- ET COPOLYMERES D'ETHYLENE POUVANT ETRE OBTENUS A L'AIDE DUDIT PROCEDE

(84) Benannte Vertragsstaaten:
**AT BE DE ES FI FR GB IT NL SE**

(30) Priorität: **09.12.1997 DE 19754380**

(43) Veröffentlichungstag der Anmeldung:
**04.10.2000 Patentblatt 2000/40**

(73) Patentinhaber: **Basell Polyolefine GmbH**
**50389 Wesseling (DE)**

(72) Erfinder:
- **BAUER, Peter**
  **D-67071 Ludwigshafen (DE)**
- **LANGE, Armin**
  **D-69121 Heidelberg (DE)**
- **KARER, Rainer**
  **D-67659 Kaiserslautern (DE)**
- **ROSENDORFER, Philipp**
  **D-67434 Neustadt (DE)**
- **HECKER, Manfred**
  **D-53577 Neustadt (DE)**
- **SCHWEIER, Günther**
  **D-67159 Friedelsheim (DE)**
- **MICKLITZ, Wolfgang**
  **D-67434 Neustadt (DE)**
- **EVERTZ, Kaspar**
  **D-67105 Schifferstadt (DE)**
- **FEINDT, Hans-Jacob**
  **D-67117 Limburgerhof (DE)**

(56) Entgegenhaltungen:
EP-A- 0 174 507      EP-A- 0 175 532
EP-A- 0 571 826      EP-A- 0 849 293
WO-A-95/33778        US-A- 5 137 994
US-A- 5 648 439

**Beschreibung**

Gegenstand der vorliegenden Erfindung ist ein kontinuierliches Gasphasenwirbelschichtverfahren zur Herstellung von Ethylenhomopolymerisaten und -copolymerisaten einer Dichte d von 0,87 bis 0,97 g/cm$^3$, bei welchem man Ethylen oder Gemische aus Ethylen und $C_3$- bis $C_8$-$\alpha$-Monoolefinen in der Polymerisationszone eines Gasphasenwirbelschichtreaktors bei Drücken von 1 bis 100 bar und Temperaturen von 30 bis 125°C in der Gasphase in einem durchmischten Schüttgutbett aus kleinteiligem Polymerisat in Anwesenheit eines geträgerten Chromkatalysators (co) polymerisiert, die hierbei entstehende Polymerisationswärme durch Kühlung des im Kreis geführten Reaktorgases abführt und das resultierende (Co)Polymerisat aus dem Gasphasenwirbelschichtreaktor ausschleust.

Weiterhin sind Gegenstand der vorliegenden Erfindung Ethylenhomound -copolymerisate erhältlich nach diesem Verfahren, die Verwendung solcher Ethylencopolymerisate zur Herstellung von Folien sowie Folien, die unter Verwendung dieser Ethylencopolymerisate hergestellt wurden.

Die Eigenschaften von Ethylenhomo- und -copolymeren hinsichtlich ihrer Verarbeitbarkeit und mechanischen Stabilität hängen im wesentlichen von ihrer Dichte, ihrer mittleren Molmasse, ihrer Molmassenverteilung, der Art des Comonomeren und der Verteilung des Comonomers über die Molmasse ab. Diese Eigenschaften hängen in komplexer Weise mit den Herstellbedingungen der Homo- und Copolymere zusammen und lassen sich sowohl durch physikalische Verfahrensparameter wie Druck und Temperatur als auch durch die Wahl bestimmter Katalysatoren beeinflußen.

Ein für die Verarbeitbarkeit von Ethylenhomo- und Copolymeren besonders wichtiger Parameter ist die Schmelzflußrate. Neben der Art und Verteilung des Comonomeren hängt die Schmelzflußrate vor allem von der mittleren Molmasse des Polymeren ab.

Verfahren zur Herstellung von Ethylencopolymeren in Gasphasenwirbelschichten unter Einsatz von geträgerten Chromkatalysatoren sind beispielsweise aus EP-A1-0175532 und EP-A1-0475603 bekannt. Um Verklebungen von Polymerisatteilchen zu vermeiden, werden diese Polymerisationsverfahren, je nach Dichte und damit Erweichungstemperatur des Polymerisats, bei unterschiedlichen Temperaturen, immer jedoch weit unterhalb der Erweichungstemperatur durchgeführt.

In EP-B-0571826 ist ein kontinuierliches Gasphasenwirbelschichtverfahren zur Herstellung von Ethylenhomo- und Copolymerisaten beschrieben, welches bei Temperaturen nur wenig unterhalb der Erweichungstemperatur der Polymerisatteilchen durchgeführt wird. Als Katalysator wird dabei ein titan- und magnesiumhaltiger Ziegelkatalysator eingesetzt.

Die nach den bekannten Gasphasenwirbelschichtverfahren hergestellten Polymerisate lassen hinsichtlich ihrer Verarbeitbarkeit noch zu wünschen übrig.

Der vorliegenden Erfindung lag daher die Aufgabe zugrunde, ein Verfahren zur Herstellung von Ethylenhomound -Copolymerisaten unter Verwendung eines geträgerten Chromkatalysators zu finden, welches zu Produkten mit verbesserten Verarbeitungseigenschaften führt.

Demgemäß wurde ein kontinuierliches Gasphasenwirbelschichtverfahren zur Herstellung von Ethylenhomopolymerisaten und -copolymerisaten einer Dichte d von 0,87 bis 0,97 g/cm$^3$ gefunden, bei welchem man Ethylen oder Gemische aus Ethylen und $C_3$- bis $C_8$-$\alpha$-Monoolefinen in der Polymerisationszone eines Gasphasenwirbelschichtreaktors bei Drücken von 1 bis 100 bar und Temperaturen von 30 bis 125°C in der Gasphase in einem durchmischten Schüttgutbett aus kleinteiligem Polymerisat in Anwesenheit eines geträgerten Chromkatalysators (co)polymerisiert, die hierbei entstehende Polymerisationswärme durch Kühlung des im Kreis geführten Reaktorgases abführt und das resultierende (Co)Polymerisat aus dem Gasphasenwirbelschichtreaktor ausschleust, welches dadurch gekennzeichnet ist, daß man zur Herstellung eines (Co)Polymerisats einer vorgewählten Dichte d die (Co)Polymerisation bei einer Temperatur durchführt, welche in einem Bereich liegt, der von einer oberen Umhüllenden der Gleichung I

$$T_H = 171 + \frac{6d'}{0,84 - d'} \tag{I}$$

und einer unteren Umhüllenden der Gleichung II

$$T_N = 175 + \frac{7,3d'}{0,837 - d'} \tag{II,}$$

worin die Variablen die folgende Bedeutung haben:

$T_H$   höchste Reaktionstemperatur in °C;
$T_N$   niedrigste Reaktionstemperatur in °C;
d'   Zahlenwert der Dichte d des herzustellenden (Co)Polymerisats;

begrenzt wird.

Weiterhin wurden neue Ethylenhomo- und -copolymere mit verbesserten Eigenschaften gefunden, die nach diesem Verfahren erhältlich sind, die Verwendung solcher Ethylencopolymerisate zur Herstellung von Folien sowie Folien, die unter Verwendung dieser Ethylencopolymerisate hergestellt werden, gefunden.

Ein wesentliches Merkmal des erfindungsgemäßen Verfahren ist die Kombination der hohen Polymerisationstemperatur mit einem speziellen Katalysator, nämlich einem geträgerten Chromkatalysator. Beide Faktoren haben bekannterweise einen Einfluß auf die Eigenschaften der herzustellenden Polymerisate. So begünstigen hohe Reaktortemperaturen die Kettenabbruchsreaktion gegenüber dem Kettenwachstum. Je höher die Reaktortemperatur ist, desto niedriger ist die mittlere Molmasse $M_w$ und desto höher ist konsequenterweise die Schmelzfließrate. Allerdings sind bei der Reaktortemperatur nach oben hin durch die Erweichungstemperatur des gebildeten Polymeren Grenzen gesetzt.

Andererseits hat auch der Katalysator einen großen Einfluß auf die Eigenschaften der herzustellenden Polymerisate. So besteht bei Chromkatalysatoren eine starke Korrelation zwischen der Trägerporosität und der mittleren Molmasse des produzierten Polymeren. Je größer das Porenvolumen des Trägers ist, desto niedriger ist die mittlere Molmasse $M_w$ und desto höher ist konsequenterweise die Schmelzfließrate (M-P. McDaniel, J. Polym. Sci., Polym. Chem. E. 21, 1217 (1983))

Auch die Temperatur, bei der ein Chromkatalysator aktiviert wird, beeinflußt die Eigenschaften der Polymerisate. Unterhalb der Sintertemperatur des eingesetzten Trägermaterials gilt folgende Abhängigkeit: Je höher die Aktivierungstemperatur des Chromkatalysators ist, dest niedriger ist die mittlere Molmasse Mw und desto höher ist konsequenterweise die Schmelzfließrate des produzierten Polymeren.

Überraschenderweise wurde nun festgestellt, daß Polymerisate, welche hinsichtlich ihrer Comonomerenzusammensetzung ihrer Dichte und ihrer Schmelzindexes kaum Unterschiede zu herkömmlichen Polymerisaten aufweisen, jedoch bei höherer Temperatur polymerisiert wurden, unterschiedliches Verarbeitungsverhalten zeigen und in dieser Hinsicht den herkömmlichen Polymerisaten z. T. deutlich überlegen sind.

Für das erfindungsgemäße Verfahren ist es wesentlich, daß man zur Herstellung eines (Co)Polymerisats einer vorgewählten Dichte d die (Co)Polymerisation bei einer Temperatur T durchführt, welche in einem Bereich liegt, der von der oberen Umhüllenden der vorstehend aufgeführten Gleichung I und der unteren Umhüllenden der vorstehend aufgeführten Gleichung II begrenzt wird. Dies bedeutet, daß Temperaturen T, welche außerhalb dieses Bereichs liegen, bei dem erfindungsgemäßen Verfahren nicht angewandt werden dürfen, weil sich ansonsten der Verfahrenserfolg nicht einstellt. Mit anderen Worten, die Gleichungen I und II geben die höchste Reaktionstemperatur $T_H$ und die niedrigste Reaktionstemperatur $T_N$ an, bei denen ein (Co)Polymerisat einer bestimmten gewünschten Dichte d mit Hilfe des erfindungsgemäßen Verfahrens gerade noch hergestellt werden kann.

Das erfindungsgemäße Verfahren wird in einem Gasphasenwirbelschichtreaktor durchgeführt, wie er beispielsweise in der EP-A-0 004 645, der EP-A-0 089 691, der EP-A-0 120 503 oder der EP-A-0 241 947 im Detail beschrieben wird. Im allgemeinen handelt es sich bei dem Gasphasenwirbelschichtreaktor um ein mehr oder weniger langes Rohr, welches von im Kreis geführtem Reaktorgas durchströmt wird. Im allgemeinen wird das im Kreis geführte Reaktorgas dem unteren Ende des Gasphasenwirbelschichtreaktors zugeführt und dessen oberen Ende wieder entnommen. Üblicherweise handelt es sich bei dem im Kreis geführten Reaktorgas um eine Mischung aus Ethylen, gewünschtenfalls einem Molekulargewichtsregler wie Wasserstoff und Inertgasen wie Stickstoff und/oder gesättigten Kohlenwasserstoffen wie Ethan, Butan oder Hexan. Außerdem kann das Reaktorgas $C_3$- bis $C_8$-$\alpha$-Monoolefine wie Propylen, But-1-en, Pent-1-en, Hex-1-en Hept-1-en und Oct-1-en enthalten. Bevorzugt ist ein Verfahren, in welchem Ethylen mit 1-Hexen copolymerisiert wird. Die Geschwindigkeit des Reaktorgases, gemessen als Leerrohrgeschwindigkeit, muß ausreichend hoch sein, um zum einen das im Rohr befindliche, als Polymerisationszone dienende, durchmischte Schüttgutbett aus kleinteiligem Polymerisat aufzuwirbeln und zum anderen die Polymerisationswärme wirksam abzuführen.

Zur Einstellung gleichbleibender Reaktionsbedingungen können die Bestandteile des Reaktorgases dem Gasphasenwirbelschichtreaktor direkt oder über das im Kreis geführte Reaktorgas zugeführt werden. Im allgemeinen erweist es sich als vorteilhaft, die vorstehend genannten $C_3$- bis $C_8$-$\alpha$-Monoolefine direkt in den Gasphasenwirbelschichtreaktor einzuleiten. Des weiteren ist es für das erfindungsgemäße Verfahren von Vorteil, den geträgerten Chromkatalysator direkt in das durchmischte Schüttgutbett aus kleinteiligem Polymerisat einzubringen. Hierbei erweist es sich als besonders vorteilhaft, den Katalysator gemäß dem in der DE-A-35 44 915 beschriebenen Verfahren portionsweise mit Stickstoff oder Argon direkt in das Schüttgutbett zu dosieren.

Um das Mitreißen von kleinteiligem Polymerisat aus der Polymerisationszone in das Kreisgassystem zu vermeiden, weist der für das erfindungsgemäße Verfahren verwendete Gasphasenwirbelschichtreaktor an seinem oberen Ende eine Beruhigungszone mit erweitertem Durchmesser auf, welche die Kreisgasgeschwindigkeit reduziert. Im allgemeinen empfiehlt es sich, die Kreisgasgeschwindigkeit in dieser Beruhigungszone auf ein Drittel bis ein Sechstel der Kreisgasgeschwindigkeit in der Polymerisationszone zu verringern.

Das im Kreis geführte Reaktorgas wird nach seinem Austritt aus dem Gasphasenwirbelschichtreaktor einem Kreisgasverdichter und einem Kreisgaskühler zugeführt. Hiernach wird das gekühlte und verdichtete Kreisgas über einen üblichen und bekannten Gasverteilerboden wieder in das durchmischte Schüttgutbett des Gasphasenwirbelschichtreaktors eingeleitet. Hierdurch resultiert eine weitestgehend homogene Gasphasenverteilung, welche eine gute Durchmischung des Schüttgutbetts gewährleistet.

Auch bei dem erfindungsgemäßen Verfahren bestimmen die Verhältnisse der Ausgangsprodukte, insbesondere aber das Verhältnis von Ethylen zu $C_3$- bis $C_8$-$\alpha$-Monolefinen die Dichte d der resultierenden Copolymerisate.

Des weiteren bestimmt die Menge des zudosierten Katalysators den Produktausstoß des Gasphasenwirbelschichtreaktors. Dessen Kapazität wird bekanntermaßen durch die Kühlkapazität des im Kreis geführten Reaktorgases begrenzt. Diese Kühlkapazität richtet sich zum einen nach dem Druck, unter dem das Reaktorgas steht bzw. bei dem die (Co)Polymerisation durchgeführt wird. Hier empfiehlt es sich im allgemeinen bei Drücken von 1 bis 100, vorzugsweise 10 bis 80 und insbesondere 15 bis 50 bar zu arbeiten. Außerdem richtet sich die Kühlkapazität nach der Temperatur, bei welcher die (Co)Polymerisation in dem durchmischten Schüttgutbett aus kleinteiligem Polymerisat durchgeführt wird. Für das erfindungsgemäße Verfahren ist es vorteilhaft, bei Temperaturen von 30 bis 125°C zu arbeiten, wobei als Ober- bzw. Untergrenze die angegebenen Temperatur/Dichte-Korrelationen zu beachten sind.

Die Temperatur in Abhängigkeit von der Dichte wird so gewählt, daß die untere Umhüllende der Temperatur/Dichte-Funktion durch die Gleichung II'

$$T_N = 175 + \frac{7,3d'}{0,837 - d'} \qquad \text{(II')}$$

gegeben ist.

Neben der Temperatur hat auch der Anteil von Inertgasen wie Stickstoff oder Kohlenwasserstoffen Einfluß auf die Gefahr des Auftretens von Verklebungen und Ablagerungen. Hohe Inertgasanteile verringern die Ablagerungsgefahr, zugleich jedoch auch die Raum-Zeit-Ausbeute, so daß das Verfahren unwirtschaftlich werden kann. Nach den erfindungsgemäßen Verfahren beträgt der Inertgasanteil vorzugsweise 25 bis 55 Vol.-%, besonders bevorzugt 35 bis 50 Vol.-%. bezogen auf das Gesamtvolumen des Reaktionsgases.

Das bei dem erfindungsgemäßen Verfahren gebildete (Co)Polymerisat kann in üblicher und bekannter Weise aus dem Gasphasenwirbelschichtreaktor ausgeschleust werden. Aufgrund der besonderen Vorteile des erfindungsgemäßen Verfahrens und der hiermit hergestellten Produkte kann dieses Ausschleusen durch einfaches Öffnen eines Kugelhahns in einer Austragsleitung zu einem Entspannungsbehälter erfolgen. Hierbei wird der Druck im Entspannungsbehälter möglichst niedrig gehalten, um auch größere Förderstrecken verwenden zu können und um die (Co)Polymerisate bereits beim Ausschleusen von adsorbierten Flüssigkeiten wie Restmonomeren zu befreien. Im Entspannungsbehälter können dann die (Co)Polymerisate beispielsweise durch Spülen mit Ethylen weiter gereinigt werden. Die hierbei desorbierten Restmonomere und das zur Spülung zugeführte Ethylen können einer üblichen und bekannten Kondensationsstufe zugeführt werden, worin sie - vorteilhafterweise bei Normaldruck und tieferen Temperaturen - wieder voneinander getrennt werden. Im allgemeinen werden die flüssigen Restmonomere dem Schüttgutbett wieder direkt zugeführt. Das zur Spülung verwendete Ethylen und andere gegebenenfalls noch vorhandene Gase können dagegen in einem üblichen und bekannten Rückgasverdichter verdichtet und dem im Kreis geführten Reaktorgas wieder hinzugegeben werden.

Die in dem Entspannungsbehälter befindlichen (Co)Polymerisate können in einen Desodorier- oder Desaktivierbehälter weitergefördert werden, worin sie einer üblichen und bekannten Stickstoff und/oder Wasserdampfbehandlung unterzogen werden können.

Neben der Reaktionsführung stellt der Katalysator einen weiteren wesentlichen Einflußfaktor auf die Polymerisateigenschaften dar. Im allgemeinen können alle geträgerten Chromkatalysatoren in dem erfindungsgemäßen Verfahren eingesetzt werden. Viele solcher Chromkatalysatoren, auch Phillipskatalysatoren genannt, sind seit langem bekannt.

Als Trägermaterialien eigenen sich besonders anorganische Verbindungen, insbesondere poröse Oxide wie $SiO_2$, $Al_2O_3$, MgO, $ZrO_2$, $B_2O_3$, CaO, ZnO oder Mischungen dieser Oxide. Die Trägermaterialien weisen vorzugsweise einen Teilchendurchmesser zwischen 1 und 300 μm, insbesondere von 30 bis 70 μm auf. Besonders bevorzugte Träger sind beispielsweise Kieselgele und Alumosilikatgele, bevorzugt solche der Formel $SiO_2 \cdot a\, Al_2O_3$, worin a für eine Zahl im Bereich von 0 bis 2 steht, vorzugsweise 0 bis 0,5; dies sind also Alumosilikate oder Siliciumdioxid. Derartige Produkte sind im Handel erhältlich, z.B. Silica Gel 332 der Fa. Grace.

Bevorzugte Katalysatoren basieren auf einem Trägermaterial mit einem Porenvolumen von 1,0 bis 3,0, vorzugsweise von 1,6 - 2,2, besonders bevorzugt von 1,7 - 1,9 ml/g und einer BET-Oberfläche von 200 bis 500, besonders bevorzugt von 300 bis 400 m$^2$/g.

Die Dotierung des Katalysatorträgers mit der chromhaltigen Aktivkomponente erfolgt vorzugsweise aus einer Lösung oder bei flüchtigen Verbindungen aus der Gasphase. Geeignete Chromverbindungen sind Chrom(VI)oxid, Chromsalze, wie z.B. Chrom(III)nitrat, Chrom(III)acetat, Komplexverbindungen, wie Chrom(III)acetylacetonat oder Chromhexacarbonyl, oder auch metallorganische Verbindungen des Chroms, wie Bis(cyclopentadienyl)chrom(II), organische Chrom(VI)säureester oder Bis(aren)chrom(0). Vorzugsweise wird Cr(III)nitrat verwendet.

Zur Beladung des Trägers verfährt man im allgemeinen so, daß man das Trägermaterial in einem Lösungsmittel mit einer Chromverbindung in Kontakt bringt, das Lösungsmittel entfernt und den Katalysator bei einer Temperatur von 400 bis 1100°C calciniert.

Das Trägermaterial kann dazu in einem Lösungsmittel oder auch in einer Lösung der Chromverbindung suspendiert werden.

Außer mit der chromhaltigen Aktivkomponente kann das Trägersystem noch mit weiteren Dotierstoffen beladen werden. Als solche Dotierstoffe kommen z.B. Verbindungen des Bors, des Fluors, des Aluminiums, des Siliciums, des Phosphors und des Titans in Betracht. Diese Dotierstoffe werden vorzugsweise gemeinsam mit den Chromverbindungen auf den Träger aufgebracht, können jedoch auch in einem getrennten Schritt vor oder nach der Chrombeladung auf den Träger aufgebracht werden.

Als Lösungsmittel für die Trägerdotierung eignen sich beispielsweise Wasser, Alkohole, Ketone, Ether, Ester und Kohlenwasserstoffe, besonders geeignet ist Methanol.

Die Konzentration der Dotierlösung beträgt im allgemeinen 0,1 - 200 g Chromverbindung/l Lösungsmittel, bevorzugt 1 - 50 g/l.

Das Gewichtsverhältnis der Chromverbindungen zum Träger während der Beladung beträgt im allgemeinen von 0,001 : 1 bis 200 : 1, vorzugsweise von 0,005 : 1 bis 100 : 1.

Eine Ausführungsform des Verfahrens sieht vor, daß der Chromkatalysator in einer Weise hergestellt wird, daß man der inaktiven Katalysatorvorstufe geringe Mengen MgO und/oder ZnO zusetzt und anschließend dieses Gemisch in üblicher Weise aktiviert.

Durch diese Maßnahme lassen sich die elektrostatischen Eigenschaften des Katalysators verbessern.

Zur Aktivierung wird die trockene Katalysatorvorstufe beispielsweise in einem Wirbelschichtreaktor in einer oxidierenden, sauerstoffhaltigen Atmosphäre bei Temperaturen zwischen 400 und 1100°C calciniert. Die Abkühlung erfolgt vorzugsweise unter einer Inertgasatmosphäre, um die Adsorption von Sauerstoff auszuschließen. Diese Calcinierung läßt sich auch in Gegenwart von Fluorverbindungen wie z.B. Ammoniumhexafluorosilikat ausführen, wodurch die Katalysatoroberfläche mit Fluoratomen modifiziert wird.

Die Calcinierung der Vorstufe erfolgt vorzugsweise in einer Gasphasenwirbelschicht. Nach einer bevorzugten Ausführungsform wird zunächst mit reinem Inertgas (bevorzugt Stickstoff) auf 200 - 400°C (bevorzugt 250 - 350°C) unter Wirbeln aufgeheizt, anschließend wird auf Luft umgestellt und bis zur gewünschten Endtemperatur aufgeheizt. Bei der Endtemperatur wird 2 - 20, vorzugsweise 5 - 15 Stunden gehalten, anschließend wieder auf Inertgas umgestellt und abgekühlt.

Nach einer bevorzugten Ausführungsform des erfindungsgemäßen Verfahrens setzt man einen geträgerten Chromkatalysator ein; der bei einer Temperatur von 600 - 800°C, besonders bevorzugt zwischen 650 und 750°C aktiviert wurde.

Die nach dem erfindungsgemäßen Verfahren erhältlichen Ethylenhomo- und -copolymerisate weisen z.T. bemerkenswerte Eigenschaften auf. Diese Eigenschaften sind besonders auffällig bei Ethylencopolymerisaten mit einer Dichte von 0,930 bis 0,945, weshalb diese Ethylencopolymerisate bevorzugt sind. Besonders bevorzugt sind Ethylencopolymerisate mit einer Dichte zwischen 0,935 und 0,940. Der besonders bevorzugte Polymerisationstemperaturbereich für Ethylencopolymere dieses Dichtebereiches liegt zwischen 110 und 113°C.

Die Feinabstimmung von Polymerisationstemperatur und Katalysator, und hierbei wiederum besonders von Porenvolumen des Trägers und Aktivierungstemperatur, erlaubt auch bei gegebenen Comonomerenanteil und damit gegebener Dichte die Herstellung von Produkten mit unterschiedlichen Schmelzflußindices (MFI) und Schmelzflußraten (MFR). Für die Herstellung von Folien haben sich besonders solche Copolymerisate als vorteilhaft erwiesen, die eine Schmelzflußrate von 8 bis 16, vorzugsweise von 10 bis 14 (gemessen nach ISO 1133; 21,6/190°C) aufweisen.

Die erfindungsgemäß hergestellten Ethylencopolymerisate, insbesondere diejenigen mit den hier genannten bevorzugten Merkmalen, eignen sich hervorragend zur Verwendung bei der Herstellung von Folien. Die Herstellung der Folien kann dabei in bekannter Weise erfolgen, insbesondere durch Blasformverfahren. Besonders geeignet sind die erfindungsgemäßen Polymerisate für Blasfilmtechniken. Die Copolymere lassen sich dabei mit großer Abzugsgeschwindigkeit verarbeiten, ohne Abrißproblem zu zeigen. Durch die ausgezeichnete Verarbeitbarkeit lassen sich unter sonst gleichen Rahmenbedingungen Folien mit geringerer Dicke herstellen, als dies mit herkömmlichen Copolymerisaten gleicher Dichte und gleichen MFI's möglich ist.

Die folgenden Beispiele erläutern die Erfindung:

Beispiele:

Beispiel 1

Herstellung eines geträgerten Chromkatalysators:

Als Träger wurde ein granulärer $SiO_2$-Träger mit einer BET-Oberfläche von 320 m$^2$/g und einem Porenvolumen von 1.75 ml/g verwendet.

Ein derartiger Träger ist beispielsweise von Fa. Grace unter der Bezeichnung Sylopol 332 kommerziell erhältlich.

100 kg des Trägers wurden mit 141 l einer Lösung von $Cr(NO_3)_3 9H_2O$ in Methanol (11,3 g/l) versetzt, und nach 1 Stunde wurde das Lösungssmittel unter vermindertem Druck abdestilliert. Die so erhaltene Vorstufe enthielt 0,2 Gew.-% Chrom

Die Vorstufe wurde in einer Gasphasenwirbelschicht calciniert. Hierbei wurde zunächst mit reinem Stickstoff auf 300°C unter Wirbeln aufgeheizt, anschließend wurde auf Luft umgestellt und bis zur gewünschten Endtemperatur von 700°C aufgeheizt. Bei der Endtemperatur wurde 10 Stunden gehalten, anschließend wieder auf Stickstoff umgestellt und abgekühlt.

Beispiel 2

Gasphasenpolymerisation

Die Polymerisation wurde in einem Wirbelschichtreaktor von 0,5 m Durchmesser durchgeführt. Die Reaktionstemperatur betrug 110,4 112,5°C, der Druck im Reaktor 21 bar. Das Reaktorgas hatte folgende Zusammensetzung: 56 Vol.-%, Ethylen 0,23 Vol.-% 1-Hexen, 2 Vol.-% Hexan und 41,77 Vol.-% Stickstoff. Als Katalysator diente der Katalysator gemäß Beispiel 1.

Beispiel 3

Herstellung der Folien

Zum Vergleich mit herkömmlich hergestellten Copolymeren wurden parallel zu einem erfindungsgemäßen Copolymer zwei verbreitete Marktprodukte unter gleichen Bedingungen verarbeitet. Die folgende Tabelle gibt einen Überblick über die Eigenschaften der eingesetzten Polymerisate:

Tabelle 1:

| Eigenschaften der Copolymere | | | |
|---|---|---|---|
| Produkt | Dichte [kg/m$^3$] | MFI | MFR |
| Polymerisat nach Beispiel 2 | 0,937 | 0,15 | 12,5 |
| Vergleichsprodukt 1 | 0,939 | 0,17 | 19 |
| Vergleichsprodukt 2 | 0,934 | 0,15 | 14,5 |

Die Folienherstellung erfolgte auf einer Folienblasmaschine der Fa. Windmöller und Hölscher unter folgenden Einstellungen: Düsendurchmesser 100 mm, Düsenspalt 1,2 mm, Massentemperatur 225°C, Massedruck 390 bar, Aufblasverhältnis 1:4, Halslänge 900 mm, Foliendicke 20 µm. Der Polymerisatdurchsatz betrug 50 kg/Stunde.

Das erfindungsgemäße Polymerisat zeigte unter den gewählten Blasfilmbedingungen im Gegensatz zu den marktüblichen Vergleichsprodukten keinerlei Abrisse. Es ließ sich mit höheren Abzugsgeschwindigkeiten verarbeiten. Dabei konnten Folien geringerer Dicke erhalten werden. Die folgende Tabelle zeigt die Ergebnisse der Folienherstellung:

Tabelle 2: Vergleich von Ausziehfähigkeit und Verarbeitbarkeit

| Nr. | Produkt | Aufblasverhältnis | Ausstoß [kg/h] | Abzugsgeschw. [m/min] | Foliendicke [µm] | Ergebniss |
|---|---|---|---|---|---|---|
| 1 | * | 1:5 | 50 | 108 | 5 | kein Abriß |
| 2 | * | 1:5 | 30 | 108 | 3 | kein Abriß |
| 3 | * | 1:3 | 50 | 108 | 9 | kein Abriß |
| 4 | ** | 1:5 | 50 | 80 | 7 | Abriß |
| 5 | ** | 1:3 | 50 | 90 | - | Abriß wegen Pumpen |
| 6 | *** | 1:5 | 50 | 75 | 7 | Abriß |
| 7 | *** | 1:3 | 50 | 80 | - | Abriß wegen Pumpen |

*    Polymerisat nach Beispiel 2

**   Vergleichsprodukt 1

***  Vergleichsprodukt 2

EP 1 040 128 B1

## EP 1 040 128 B1

**Patentansprüche**

1. Kontinuierliches Gasphasenwirbelschichtverfahren zur Herstellung von Ethylenhomopolymerisaten und -copolymerisaten einer Dichte d von 0,87 bis 0,97 g/cm$^3$, bei welchem man Ethylen oder Gemische aus Ethylen und C$_3$- bis C$_8$-$\alpha$-Monoolefinen in der Polymerisationszone eines Gasphasenwirbelschichtreaktors bei Drücken von 1 bis 100 bar und Temperaturen von 30 bis 125°C in der Gasphase in einem durchmischten Schüttgutbett aus kleinteiligem Polymerisat in Anwesenheit eines geträgerten Chromkatalysators (co)polymerisiert, die hierbei entstehende Polymerisationswärme durch Kühlung des im Kreis geführten Reaktorgases abführt und das resultierende (Co)Polymerisat aus dem Gasphasenwirbelschichtreaktor ausschleust, **dadurch gekennzeichnet, daß** man zur Herstellung eines (Co)Polymerisats einer vorgewählten Dichte d die (Co)Polymerisation bei einer Temperatur durchführt, welche in einem Bereich liegt, der von einer oberen Umhüllenden der Gleichung I

$$T_H = 171 + \frac{6d'}{0,84 - d'} \tag{I}$$

und einer unteren Umhüllenden der Gleichung II

$$T_N = 175 + \frac{7,3d'}{0,837 - d'} \tag{II},$$

worin die Variablen die folgende Bedeutung haben:

$T_H$ höchste Reaktionstemperatur in °C;
$T_N$ niedrigste Reaktionstemperatur in °C;
d' Zahlenwert der Dichte d des herzustellenden (Co)Polymerisats;

begrenzt wird.

2. Verfahren nach Anspruch 1, **dadurch gekennzeichnet, daß** man einen geträgerten Chromkatalysator einsetzt, der bei einer Temperatur zwischen 600 und 800°C aktiviert wurde.

3. Verfahren nach Anspruch 1 oder 2, **dadurch gekennzeichnet, daß** man einen geträgerten Chromkatalysator mit einem mittleren Porenvolumen von 1,0 bis 3,0 ml/g einsetzt.

4. Verfahren nach den Ansprüchen 1 bis 3, **dadurch gekennzeichnet, daß** man Ethylen mit 1-Hexen copolymerisiert.

5. Ethylenhomo- und copolymerisate, erhältlich nach einem Verfahren gemäß den Ansprüchen 1 bis 4.

6. Ethylencopolymerisate nach Anspruch 5 mit einer Dichte von 0,930 bis 0,945.

7. Ethylencopolymerisate nach den Ansprüchen 5 oder 6 mit einer Schmelzflußrate MFR von 8 bis 16, gemessen nach ISO 1133.

8. Verwendung von Ethylencopolymerisaten gemäß den Ansprüchen 5 bis 7 zur Herstellung von Folien.

9. Folien, hergestellt unter Verwendung von Ethylencopolymerisaten gemäß Anspruch 8.

**Claims**

1. A continuous gas-phase fluidized-bed process for preparing ethylene homopolymers and copolymers having a density d of from 0.87 to 0.97 g/cm$^3$, in which ethylene or mixtures of ethylene and C$_3$-C$_8$-$\alpha$-monoolefins are (co)polymerized in the polymerization zone of a gas-phase fluidized-bed reactor at from 30 to 125°C and pressures of from 1 to 100 bar in the gas phase in a mixed bed of finely divided polymer in the presence of a supported chromium catalyst, the resulting heat of polymerization is removed by cooling the circulated reactor gas and the resulting (co)polymer is discharged from the gas-phase fluidized-bed reactor, wherein a (co)polymer having a preselected density d is prepared by carrying out the (co)polymerization at a temperature in a range bounded by an upper limit given by the equation I

$$T_H = 171 + \frac{6d'}{0.84 - d'} \tag{I}$$

and a lower limit given by the equation II

$$T_N = 175 + \frac{7.3d'}{0.837 - d'} \tag{II},$$

where the variables have the following meanings:

$T_H$ is the maximum reaction temperature in $°C$;
$T_N$ is the minimum reaction temperature in $°C$;
d' is the numerical value of the density d of the (co)polymer to be prepared.

2. A process as claimed in claim 1, wherein the supported chromium catalyst used has been activated at a temperature in the range from 600 to 800°C.

3. A process as claimed in claim 1 or 2, wherein the supported chromium catalyst used has a mean pore volume of from 1.0 to 3.0 ml/g.

4. A process as claimed in any of claims 1 to 3, wherein ethylene is copolymerized with 1-hexene.

5. An ethylene homopolymer or copolymer obtainable by a process as claimed in any of claims 1 to 4.

6. An ethylene copolymer as claimed in claim 5 having a density of from 0.930 to 0.945.

7. An ethylene copolymer as claimed in claim 5 or 6 having a melt flow rate MFR of from 8 to 16, measured in accordance with ISO 1133.

8. The use of an ethylene copolymer as claimed in any of claims 5 to 7 for producing films.

9. A film produced using an ethylene copolymer as claimed in claim 8.

**Revendications**

1. Procédé par lit fluidisé en phase gazeuse en continu pour la préparation d'homo- et de copolymères d'éthylène ayant une masse volumique d de 0,87 à 0,07 g/cm$^3$, dans lequel on (co)polymérise de l'éthylène ou des mélanges d'éthylène et d'$\alpha$-monooléfines en $C_3$ à $C_8$ dans la zone de polymérisation d'un réacteur à lit fluidisé en phase gazeuse à des pressions de 1 à 100 bar et des températures de 30 à 125°C dans la phase gazeuse dans un lit de matières en vrac mélangées intimement, à partir d'un polymère en fines particules en présence d'un catalyseur au chrome sur support, on évacue la chaleur de polymérisation alors formée par refroidissement du gaz du réacteur introduit dans un cycle et on extrait le produit de (co)polymérisation résultant du réacteur à lit fluidisé en phase gazeuse, **caractérisé par le fait que** pour la préparation d'un produit de (co)polymérisation ayant une densité d prédéterminée on conduit la (co)polymérisation à une température qui se situe dans un intervalle qui est limité par une enveloppe supérieure répondant à l'équation I

$$T_H = 171 + \frac{6d'}{0,84 - d'} \tag{I}$$

et une enveloppe inférieure répondant à l'équation II

$$T_N = 175 + \frac{7,3d'}{0,837 - d'} \tag{II},$$

où les variables ont la signification suivante:

$T_H$     la température de réaction la plus élevée, en °C;
$T_N$     la température de réaction la plus faible, en °C;
d'     la valeur de la densité d du produit de (co)polymérisation à préparer.

**2.** Procédé selon la revendication 1, **caractérisé par le fait qu'**on utilise un catalyseur au chrome sur support qui a été activé à une température entre 600 et 800°C.

**3.** Procédé selon la revendication 1 ou 2, **caractérisé par le fait qu'**on utilise un catalyseur sur support ayant un volume moyen des pores de 1,0 à 3,0 ml/g.

**4.** Procédé selon les revendications 1 à 3, **caractérisé par le fait qu'**on copolymérise de l'éthylène avec du 1-hexène.

**5.** Produits d'homo- et de copolymérisation d'éthylène, pouvant être obtenus conformément au procédé selon les revendications 1 à 4.

**6.** Produit de copolymérisation d'éthylène selon la revendication 5, ayant une densité de 0,930 à 0,945.

**7.** Produit de copolymérisation d'éthylène selon les revendications 5 ou 6, ayant un indice de fusion MFR de 8 à 16, mesuré selon la norme ISO 1133.

**8.** Utilisation de produits de copolymérisation d'éthylène selon les revendications 5 à 7 pour la préparation de feuilles.

**9.** Feuilles, préparées au moyen de produits de copolymérisation d'éthylène selon la revendication 8.